Europäisches Patentamt

European Patent Office

Office européen des brevets

(19)

(11) EP 0 704 776 B1

(12) EUROPÄISCHE PATENTSCHRIFT

(45) Veröffentlichungstag und Bekanntmachung des Hinweises auf die Patenterteilung:
25.11.1998 Patentblatt 1998/48

(51) Int Cl.$^6$: **G05B 13/02**

(21) Anmeldenummer: 95114575.4

(22) Anmeldetag: 15.09.1995

(54) **Verfahren zur Parametrierung eines PI- oder PID-Reglers**

Method for adjusting the parameters of a PI or a PID controller

Procédé de réglage des paramètres d'un régulateur PI ou PID

(84) Benannte Vertragsstaaten:
DE FR GB IT SE

(30) Priorität: 28.09.1994 DE 4434703

(43) Veröffentlichungstag der Anmeldung:
03.04.1996 Patentblatt 1996/14

(73) Patentinhaber: SIEMENS AKTIENGESELLSCHAFT
80333 München (DE)

(72) Erfinder: Kirchberg, Karl-Heinz
D-76187 Karlsruhe (DE)

(56) Entgegenhaltungen:
- PATENT ABSTRACTS OF JAPAN vol. 13 no. 212 (P-873),18.Mai 1989 & JP-A-01 029904 (OMRON) 31.Januar 1989,
- PROCEEDINGS OF THE 1987 INTERNATIONAL CONFERENCE ON INDUSTRILA ELECTRONICS, CONTROL, AND INSTRUMENTATION, Bd. 1/2, November 1987 CAMBRIDGE US, Seiten 102-109, TEN-HUEI GUO, CHENG WU 'ADAPTIVE CONTROLLER FOR A GLASS VISCOELASTIC TESTING PROCESS'
- AUTOMATISIERUNGSTECHNISCHE PRAXIS - ATP, Bd. 31, Nr. 2, 1.Februar 1989 Seiten 53-57, XP 000104875 GRIES P ET AL 'ERFAHRUNGEN MIT EINEM INBETRIEBSETZUNGSGERAT AN EINER CHEMIEANLAGE'
- PATENT ABSTRACTS OF JAPAN vol. 14 no. 165 (P-1030),30.März 1990 & JP-A-02 021303 (TOSHIBA CORP)
- CONFERENCE PROCEEDINGS OF THE IEEE SOUTHEASTCON '85 , 31.März 1985 - 3.April 1985 RALEIGH US, Seiten 325-332, G.S. CHENG AND J.C. HUNG 'A least-square based self-tuning of PID controller'
- PATENT ABSTRACTS OF JAPAN vol. 12 no. 303 (P-746),18.August 1988 & JP-A-63 075801 (YOKOGAWA ELECTRIC CORP) 6.April 1988,
- PATENT ABSTRACTS OF JAPAN vol. 11 no. 109 (P-564),7.April 1987 & JP-A-61 256401 (MITSUBISHI HEAVY IND)

**Beschreibung**

Die Erfindung betrifft ein Verfahren zur Parametrierung eines PI- oder PID-Reglers nach dem Oberbegriff des Anspruchs 1.

Ein derartiges Verfahren ist bereits aus dem Aufsatz "Robuste Adaption in Prozeßreglern" von Hans-Peter Preuß, veröffentlicht in der Zeitschrift "Automatisierungstechnische Praxis" 33 (1991), Seiten 178 bis 187, bekannt. Ein Regelkreis besteht dort aus einem Vergleicher, der aus einem Vergleich einer an der Strecke gemessenen Regelgröße mit einer Führungsgröße eine Regeldifferenz bildet, und einem Regler, der in Abhängigkeit von der Regeldifferenz eine Stellgröße für die Strecke bestimmt. Grundlage einer PID-Reglerparametrierung ist eine Sprungantwort der Regelstrecke, von der in angemessenem Zeitabstand Abtastwerte gewonnen und abgespeichert werden. Der gemessene Verlauf wird durch einen speziellen Modellansatz, ein $PT_n$-Modell, approximiert, um ein darauf zugeschnittenes Reglereinstellverfahren, beispielsweise das Betragsoptimum, anwenden zu können. Dieses Verfahren hat den Nachteil, daß es an seine Grenzen stößt, wenn die Voraussetzungen für die mathematische Modellbildung nicht gegeben sind.

Aus JP-A-1 029 904 in "Patent Abstracts of Japan", Volume 13, No. 212 (P-873), ist eine zeitdiskrete Regeleinrichtung bekannt, bei welcher die Regelung von einem PID-Regler auf einen adaptiven Zweipunkt-Regler umgeschaltet wird, wenn die Regeldifferenz eine vorgegebene Größe überschreitet. Ein zeitdiskretes Streckenmodell des adaptiven Zweipunkt-Reglers wird dazu benutzt, einen Parameter für den PID-Regler zu bestimmen.

Der Erfindung liegt die Aufgabe zugrunde, ein Verfahren zur Parametrierung eines PI- oder PID-Reglers zu finden, bei dem auf ein Modell der Strecke verzichtet werden kann und das dennoch ein gutes Regelverhalten gewährleistet.

Zur Lösung dieser Aufgabe weist das neue Verfahren die im kennzeichnenden Teil des Anspruchs 1 genannten Merkmale auf, in den Unteransprüchen sind vorteilhafte Weiterbildungen angegeben.

Der obengenannte Nachteil des bekannten Verfahrens wird vorteilhaft durch das neue Verfahren vermieden. Bei dem neuen Verfahren wird ein anderer, neuartiger Ansatz gewählt, um konventionelle PI- oder PID-Regler zu entwerfen, indem ein Musterregler bzw. das Erfahrungswissen von Anlagenfahrern zur Berechnung der Reglerparameter verwendet wird. Geübte Anlagenfahrer sind in der Lage, Strecken zu regeln, ohne ein explizites Streckenmodell zu ermitteln. Dabei ist von Vorteil, daß sich die Stellgröße eines konventionellen PID-Reglers additiv aus dem P-, I- und D-Anteil zusammensetzt. Der P-Anteil ist die Stellgröße, die sich aus der aktuellen Regeldifferenz ergibt, der I-Anteil ist vom bisherigen Verlauf der Regeldifferenz abhängig, und der D-Anteil entspricht der aktuellen Änderung, dem Gradienten der Regeldifferenz. Die jeweilige Größe der drei Anteile wird durch Parameter Kp, Tn und Tv bestimmt. Dieses Reglerverhalten ist leicht verständlich und hat zur großen Verbreitung dieses Reglertyps beigetragen. Gleichzeitig entspricht es den Überlegungen eines Anlagenfahrers bei der Handfahrweise: Tritt bei einer Regelung eine größere Regelabweichung auf, dann wird der Anlagenfahrer zunächst mit einer sprungförmigen Änderung der Stellgröße gegensteuern. Die Reaktion des Prozesses auf diesen Stelleingriff wird abgewartet. War die Stellgrößenänderung zu groß, dann wird die Stellgröße teilweise zurückgenommen. Die verbleibende Regeldifferenz wird dann schrittweise mit kleineren Stelleingriffen ausgeregelt.

Das Verfahren ist auch vorteilhaft anwendbar, wenn ein alter, bisher im Regelkreis verwendeter Regler durch einen anderen, neuen Regler, z. B. eines anderen Herstellers oder einer anderen Bauart, ersetzt werden soll. Man muß nämlich bei Reglern zwischen den eingestellten Parametern und den im Regelkreis wirksamen Parametern unterscheiden. Diese Unterschiede können am Regelalgorithmus oder an der Bauart des Reglers liegen, z. B. wenn ein analoger, elektronischer Regler durch einen Abtastregler ersetzt werden soll, der nach einem Algorithmus arbeitet. Die an dem alten Regler eingestellten Parameter können daher nicht immer direkt auf die Parameter des neuen Reglers übertragen werden. Mit dem neuen Verfahren ist es möglich, die im Regelkreis wirksamen Parameter des alten Reglers zu bestimmen, so daß die Parameter des neuen Reglers optimal eingestellt werden können.

Anhand der Figur, in der eine Einrichtung zur Durchführung des erfindungsgemäßen Verfahrens dargestellt ist, werden im folgenden die Erfindung sowie Ausgestaltungen und Vorteile näher erläutert.

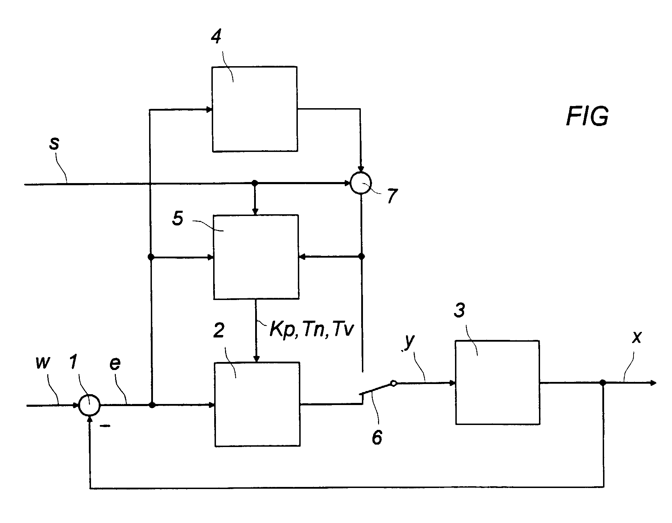

Eine geeignete Einrichtung besteht nach Figur 1 aus einem Vergleicher 1, einem Regler 2, einer Strecke 3, einem Musterregler 4, einer Recheneinheit 5, einem Schalter 6 und einem Summierer 7. In dem Vergleicher 1 wird eine an der Regelstrecke 3 gemessene Regelgröße x mit einer Führungsgröße w verglichen und so eine Regeldifferenz e gebildet. Der Regler 2, der als PID-Regler ausgeführt ist und seine Parameter Kp, Tn und Tv von der Recheneinheit 5 erhält, bestimmt in der eingezeichneten Stellung des Schalters 6 aus der Regeldifferenz e eine Stellgröße y, die auf die Strecke 3 wirkt. Zur Berechnung der Reglerparameter Kp, Tn und Tv wird der Schalter 6 umgelegt, so daß der Musterregler 4 die Aufgabe des Reglers 2 übernimmt. Gleichzeitig wird der Regelkreis durch eine Störgröße s, die mit dem Summierer 7 dem Ausgangssignal des Musterreglers 4 überlagert wird, angeregt. Die Störung kann im Prinzip beliebig in die Strecke eingreifen. Sie muß nicht unbedingt am Eingang der Regelstrecke über den Reglerstellwert aufgeschaltet werden. In ähnlicher Weise kann diese Anregung auch durch einen Sollwertsprung erfolgen. Der Musterregler 4 muß die entstehende Regelabweichung ausregeln. Die Störgröße kann beim Musterregler ebenfalls mit berücksichtigt werden. Dies ist z. B. der Fall, wenn der Musterregler ein Anlagenfahrer ist, der die Störgröße beobachtet. Dabei wird der Verlauf der relevanten Größen im Regelkreis, in diesem Ausführungsbeispiel der Regeldifferenz e und der Stellgröße y, durch die Recheneinheit 5 abgetastet und gespeichert. In einer nachfolgenden Optimierung werden die Parameter des Reglers 2 so eingestellt, daß er näherungsweise das Verhalten des Musterreglers 4 nachbildet. Eingangsgröße des Reglers 2 ist dazu die Regeldifferenz e, Ausgangsgröße die zugehörige Stellgröße y. Falls erforderlich, kann der Regler 2 noch um einen nichtlinearen Teil, z. B. eine Parametersteuerung für die Reglerverstärkung oder eine Ansprechschwelle, erweitert werden.

Der Vorteil dieses anderen, neuartigen Ansatzes, um konventionelle Regler zu entwerfen, liegt darin, daß das Optimierungsproblem vergleichsweise einfach ist. Es müssen nur wenige Parameter, für den PID-Regler Kp, Tn und Tv, optimiert werden, und die Güte der Optimierung kann leicht beurteilt werden. Mit dieser Methode ist das Erfahrungswissen eines Anlagenfahrers in einen konventionellen Regelalgorithmus oder eine konventionelle Reglerstruktur überführbar, ohne vorher ein mathematisches Prozeßmodell zu ermitteln. Dabei ist es vorteilhaft, daß die Reglerstruktur gut interpretierbar ist und damit gegebenenfalls vom Anwender noch leicht nachoptimiert werden kann.

Im folgenden soll die eigentliche Berechnung der Parameter Kp, Tn und Tv eines PID-Reglers 2 mit der Recheneinheit 5 erläutert werden:

Von einem Regelvorgang mit dem Musterregler 4 werden mit konstanter Abtastzeit Ta insgesamt n+1 Stützwerte der Regeldifferenz e und der gestörten Stellgröße y abgespeichert. Weiterhin wird die Störgröße s, von der die Stellgröße y abhängt, mit berücksichtigt. Die Störgröße s stellt die oben erwähnte Anregung des Regelkreises dar, die durch den Musterregler 4 ausgeregelt werden soll und somit als meßbare Größe vorliegt. Die Reglerparameter können also aufgrund der folgenden Größen berechnet werden:

$$[e(t),y(t),s(t)] = [e(0),y(0),s(0); \; e(Ta),y(Ta),s(Ta); \; e(2{*}Ta),y(2{*}Ta),s(2{*}Ta);$$

$$e(3{*}Ta), \; y(3{*}Ta), \; s(3{*}Ta); \; ... \; e(n{*}Ta),y(n{*}Ta),s(n{*}Ta)]$$

Die Werte e(0), y(0), s(0) sind die Startwerte des Ausregelvorgangs zum Zeitpunkt t = 0. Da der Regelvorgang aus einem im wesentlichen stationären Zustand heraus beginnt, hat die Regeldifferenz e zu diesem Zeitpunkt den Wert Null.

Die idealisierte Gleichung eines kontinuierlichen PID-Reglers lautet:

$$y(t) = Kp * \left[ e(t) \; + \; \frac{1}{Tn} * \int_{0}^{t} e(\tau) * d(\tau) \; + \; Tv * \frac{de(t)}{dt} \right] + V * s(t) \qquad (1)$$

Die Störgröße s wird in dieser Gleichung mit dem Faktor V gewichtet. Betrachtet man nun die diskreten Abtastzeitpunkte $t_k = k{*}Ta$ und ersetzt die kontinuierliche Integration durch eine Trapezintegration sowie die Ableitung durch eine Differenzenbildung, so erhält man den folgenden Algorithmus:

$$y(k) = Kp * \left[ e(k) + \frac{Ta}{Tn} * \left( \frac{e(0)+e(k)}{2} + \sum_{i=1}^{k-1} e(i) \right) + \frac{Tv}{Ta} * (e(k) - e(k-1)) \right] + V * s(k)$$

$$(2)$$

Der Übersichtlichkeit halber ist in dieser Gleichung der Abtastzeitpunkt lediglich mit seinem Index k bezeichnet.

Für die Differenz $\Delta y = y(k) - y(k-1)$ zweier aufeinanderfolgender Werte der Stellgröße y erhält man mit diesem Algorithmus:

$$y(k) - y(k-1) = a0{*}e(k) + a1{*}e(k-1) + a2{*}e(k-2) + V{*}[s(k) - s(k-1)] \qquad (3)$$

mit den Parametern:

$$a2 = Kp * \frac{Tv}{Ta}$$

$$a1 = -Kp * \left(1 - \frac{1}{2}\frac{Ta}{Tn} + 2\frac{Tv}{Ta}\right)$$

$$a0 = Kp * \left(1 + \frac{1}{2}\frac{Ta}{Tn} + \frac{Tv}{Ta}\right) \tag{4}$$

bzw. die Gleichungen für die Reglerparameter:

$$Kp = 0.5*(a0-a1+a2)$$

$$Tn = \frac{Kp}{a0+a1-3*a2} *Ta$$

$$Tv = \frac{a2}{Kp} Ta \tag{5}$$

Die n+1 gespeicherten Abtastwerte der Regeldifferenz e, der Stellgröße y sowie der Störgröße s werden in die Gleichung (3) eingesetzt. Man erhält so das folgende Gleichungssystem aus n Gleichungen:

$$
\begin{aligned}
y(1) - y(0) &= a0*e(1) + a1*e(0) & &+ V * [s(1) - s(0)] \\
y(2) - y(1) &= a0*e(2) + a1*e(1) + a2*e(0) &+ V * [s(2) - s(1)] \\
y(3) - y(2) &= a0*e(3) + a1*e(2) + a2*e(1) &+ V * [s(3) - s(2)] \\
y(4) - y(3) &= a0*e(4) + a1*e(3) + a2*e(2) &+ V * [s(4) - s(3)] \\
&\;\;\vdots \\
&\textbf{usw.}
\end{aligned}
$$

Dieses Gleichungssystem lautet in Matrizenschreibweise:

$$
\begin{bmatrix}
e(1) & e(0) & 0 & [s(1)-s(0)] \\
e(2) & e(1) & e(0) & [s(2)-s(1)] \\
e(3) & e(2) & e(1) & [s(3)-s(2)] \\
\vdots \\
e(n) & e(n-1) & e(n-2) & [s(n)-s(n-1)]
\end{bmatrix}
*
\begin{bmatrix}
a0 \\ a1 \\ a2 \\ V
\end{bmatrix}
=
\begin{bmatrix}
y(1)-y(0) \\
y(2)-y(1) \\
y(3)-y(2) \\
\vdots \\
y(n)-y(n-1)
\end{bmatrix}
\tag{6}
$$

oder abgekürzt:

$$\underline{E} * \underline{A} = \underline{Y} \tag{7}$$

Die Parameter von $\underline{A}$ können nun durch Lösen des linearen Gleichungssystems ermittelt werden. Für ein überbestimmtes Gleichungssystem mit linear unabhängigen Zeilen und Spalten lautet die Lösung:

$$\underline{A} = (\underline{E}^T * \underline{E})^{-1} * \underline{E}^T * \underline{Y} \tag{8}$$

Dabei wird der quadratische Fehler minimiert. Aus den ermittelten Parametern a0, a1 und a2 können direkt die Parameter Kp, Tn und Tv des PID-Reglers 2 berechnet werden. Der Faktor V ist direkt in der Lösung des Gleichungssystems enthalten.

Die Parameter Kp, Tn, Tv und der Faktor V werden so ermittelt, daß sich der Regler ähnlich verhält wie der Musterregler. Dies erfolgt dadurch, daß der zu berechnende PID-Regler die gleichen Eingangssignale wie der Musterregler erhält. Die Parameter des PID-Reglers werden über die Recheneinheit so eingestellt, daß die Abweichung zwischen den Ausgangswerten des PID-Reglers und den Ausgangswerten des Musterreglers minimal wird. Eine Vorgehensweise dafür ist die oben beschriebene Methode der kleinsten Fehlerquadrate.

Sollen die Reglerparameter nach einem anderen Fehlermaß, beispielsweise dem Betragsfehler, oder soll eine andere Reglerstruktur berechnet werden, so müssen die Reglerparameter mit einer numerischen Optimierung ermittelt werden. Die Parameter der zu optimierenden Reglerstruktur werden dann direkt anhand der Stützwerte mit dem Optimierungsalgorithmus berechnet. Gegebenenfalls können mit einer Datenaufbereitung die numerischen Eigenschaften der gespeicherten Stützwerte verbessert werden.

**Patentansprüche**

1. Verfahren zur Parametrierung eines PI- oder PID-Reglers (2) in einem Regelkreis, in welchem ein Vergleicher (1) aus einer an einer Strecke (3) gemessenen Regelgröße (x) und einer Führungsgröße (w) eine Regeldifferenz (e) bildet und in welchem der Regler (2) in Abhängigkeit von der Regeldifferenz (e) eine Stellgröße (y) für die Strecke (3) bestimmt, **dadurch gekennzeichnet,**

   - daß der Regelkreis aus einem im wesentlichen stationären Zustand heraus angeregt wird,
   - daß anstelle des Reglers (2) ein Musterregler (4) in den Regelkreis eingesetzt wird, der den Regelkreis wieder in den stationären Zustand einregelt,
   - daß die Eingangs- und Ausgangssignale (e, y) des Musterreglers (4) gemessen und abgespeichert werden und
   - daß die Parameter (Kp, Tn, Tv) des Reglers (2), anhand der gemessenen und abgespeicherten Eingangs- und Ausgangssignale (e,y) des Musterreglers derart berechnet werden, daß er zumindest näherungsweise das Verhalten des Musterreglers (4) nachbildet.

2. Verfahren nach Anspruch 1, dadurch gekennzeichnet,

   - daß der Regelkreis durch einen Anlagenfahrer als Musterregler (4) von Hand wieder in den stationären Zustand eingeregelt wird,
   - daß der Verlauf der relevanten Größen (e, y) im Regelkreis gemessen und abgespeichert wird und
   - daß die Parameter (Kp, Tn, Tv) des Reglers (2) derart berechnet werden, daß er zumindest näherungsweise das Verhalten des Anlagenfahrers nachbildet.

3. Verfahren nach Anspruch 1, **dadurch gekennzeichnet,**

   - daß der Musterregler (4) und der Regler (2) verschiedene Algorithmen verwenden.

4. Verfahren nach einem der vorhergehenden Ansprüche, **dadurch gekennzeichnet**,

   - daß die Anregung des Regelkreises durch einen Sollwertsprung erfolgt.

5. Verfahren nach einem der Ansprüche 1 bis 3, **dadurch gekennzeichnet,**

- daß die Anregung des Regelkreises durch Aufschalten einer Störgröße (s) auf die Stellgröße (y) erfolgt.

6. Verfahren nach einem der vorhergehenden Ansprüche, **dadurch gekennzeichnet,**

- daß die Parameter (Kp, Tn, Tv) des Reglers (2) nach der Methode der kleinsten Fehlerquadrate berechnet werden.

**Claims**

1. Method for adjusting the parameters of a PI or a PID controller (2) in a control loop, in which a comparator (1) establishes a system deviation (e) from a controlled variable (x) measured at a system (3) and a reference variable (w) and in which the controller (2) determines a manipulated variable (y) for the system (3) as a function of the system deviation (e), characterised

- in that the control loop is excited out of a substantially steady state,
- in that instead of the controller (2) a sample controller (4) is inserted into the control loop which adjusts the control loop back into the steady state,
- in that the input and output signals (e, y) of the sample controller (4) are measured and stored, and
- in that the parameters (Kp, Tn, Tv) of the controller (2) are calculated with the aid of the measured and stored input and output signals (e, y) of the sample controller in such a way that at least in an approximate manner the controller (2) emulates the behaviour of the sample controller (4).

2. Method according to claim 1, characterised

- in that the control loop is adjusted back into the steady state manually by a system operator as a sample controller (4),
- in that the response of the relevant variables (e, y) in the control loop is measured and stored, and
- in that the parameters (Kp, Tn, Tv) of the controller (2) are calculated in such a way that at least in an approximate manner the controller (2) emulates the behaviour of the system operator.

3. Method according to claim 1, characterised

- in that the sample controller (4) and the controller (2) use different algorithms.

4. Method according to one of the preceding claims, characterised

- in that the excitation of the control loop is effected by means of a setpoint step-change.

5. Method according to one of claims 1 to 3, characterised

- in that the excitation of the control loop is effected by feed-forwarding a disturbance variable (s) to the manipulated variable (y).

6. Method according to one of the preceding claims, characterised

- in that the parameters (Kp, Tn, Tv) of the controller (2) are calculated in accordance with the method of least error squares.

**Revendications**

1. Procédé de paramétrage d'un régulateur (2) PI ou PID dans un circuit de régulation, dans lequel un comparateur (1) forme une différence (e) de régulation à partir d'une variable asservie (x) mesurée sur un parcours (3) et d'une valeur de consigne (w) et dans lequel le régulateur (2) détermine pour le parcours (3) une variable réglante (y) en fonction de la différence (e) de régulation, caractérisé

- en ce que le circuit de régulation est mis hors d'un état sensiblement stationnaire,

-    en ce que l'on met dans le circuit de régulation au lieu du régulateur (2) un régulateur (4) modèle qui remet le circuit de régulation à l'état stationnaire,

-    en ce que l'on mesure et mémorise les signaux (e,y) d'entrée et de sortie du régulateur (4) modèle et

-    en ce que l'on calcule les paramètres (Kp, Tn, Tv) du régulateur (2) au moyen des signaux (e,y) d'entrée et de sortie mesurés et mémorisés du régulateur modèle (4) de façon à ce qu'il reproduise au moins approximativement le comportement du régulateur modèle (4).

2.   Procédé suivant la revendication 1, caractérisé en ce que

-    le circuit de régulation est remis manuellement à l'état stationnaire par un conducteur d'installation faisant office de régulateur modèle (4),

-    la courbe des grandeurs (e,y) pertinentes du circuit de régulation est mesurée et mémorisée et

-    les paramètres (Kp, Tn, Tv) du régulateur (2) sont calculés de façon à reproduire au moins approximativement le comportement du conducteur de l'installation.

3.   Procédé suivant la revendication 1, caractérisé
en ce que le régulateur modèle (4) et le régulateur (2) utilisent des algorithmes différents.

4.   Procédé suivant l'une des revendications précédentes, caractérisé
en ce que la mise du circuit de régulation hors de l'état stationnaire s'effectue par un saut d'une valeur de consigne.

5.   Procédé suivant l'une des revendications 1 à 3, caractérisé
en ce que la mise du circuit de régulation hors de l'état stationnaire s'effectue en prenant une grandeur (s) de perturbation comme variable réglante (y).

6.   Procédé suivant l'une des revendications précédentes, caractérisé
en ce que les paramètres (Kp, Tn, Tv) du régulateur (2) sont calculés suivant la méthode des moindres carrés d'erreur.

FIG